# FASCICULE DE BREVET EUROPEEN

(11) **EP 2 401 233 B1**
(45) Date de publication et mention de la délivrance du brevet: **10.07.2013**
(21) Numéro de dépôt: 10708614.2
(22) Date de dépôt: 24.02.2010
(51) Int. Cl.: C04B 35/48, C04B 35/484, C03B 5/43

(54) **PRODUIT REFRACTAIRE A FORTE TENEUR EN ZIRCONE**
FEUERFESTES PRODUKT MIT HOHEM ZIRCONIUMOXIDGEHALT
REFRACTORY PRODUCT HAVING A HIGH ZIRCONIA CONTENT

(30) Priorité: 25.02.2009 FR 0951189
(43) Date de publication de la demande: 04.01.2012
(73) Titulaire: Saint-Gobain Centre De Recherches Et D'etudes Europeen, 92400 Courbevoie (FR)
(72) Inventeur: GAUBIL, Michel, F-30133 Les Angles (FR); CABODI, Isabelle, F-84300 Cavaillon (FR); PAPIN, Sophie, F-92390 Villeneuve La Garenne (FR)
(74) Mandataire: Sartorius, Jérome
(86) Numéro de dépôt international: PCT/IB2010/050816
(87) Numéro de publication internationale: WO 2010/097769

(56) Documents cités:
- WO-A-2007/099253
- FR-A- 2 897 861
- FR-A- 2 897 862

## Description

### Domaine technique

L'invention concerne un nouveau produit réfractaire fondu et coulé à forte teneur en zircone.

### Etat de la technique

Parmi les produits réfractaires, on distingue les produits fondus et coulés, bien connus pour la construction des fours de fusion du verre, et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fritté n'est donc pas *a priori* utilisable telle quelle pour fabriquer un produit fondu et coulé, et réciproquement.

Les produits fondus et coulés, souvent appelés électrofondus, sont obtenus par fusion d'un mélange de matières premières appropriées dans un four à arc électrique ou par toute autre technique adaptée à ces produits. La matière en fusion est ensuite coulée dans un moule puis le produit obtenu subit un cycle de refroidissement contrôlé pour être amené à température ambiante sans fracturation. Cette opération est appelée « recuisson » par l'homme de l'art.

Parmi les produits fondus et coulés, les produits électrofondus à forte teneur en zircone, c'est-à-dire comportant plus de 85% en poids de zircone (ZrO₂), sont réputés pour leur qualité de très grande résistance à la corrosion sans coloration du verre produit et sans génération de défauts.

Classiquement, les produits fondus et coulés à forte teneur en zircone comportent également de l'oxyde de sodium (Na₂O) pour éviter la formation de zircon à partir de la zircone et de la silice présentes dans le produit. La formation de zircon est en effet néfaste puisqu'elle s'accompagne d'une diminution de volume de l'ordre de 20%, créant ainsi des contraintes mécaniques à l'origine de fissures.

Le produit ER-1195 produit et commercialisé par Saint-Gobain SEFPRO et couvert par le brevet EP-B-403 387 est aujourd'hui largement utilisé dans les fours de fusion du verre. Sa composition chimique comprend environ 94% de zircone, 4 à 5% de silice, environ 1% d'alumine, 0,3% d'oxyde de sodium et moins de 0,05% en poids de P₂O₅. Elle est typique des produits à forte teneur en zircone utilisés pour les fours verriers.

FR 2 701 022 décrit des produits fondus et coulés à forte teneur en zircone qui contiennent 0,05 à 1,0% en poids de P₂O₅ et 0,05 à 1,0% en poids d'oxyde de bore B₂O₃. Ces produits présentent une résistivité électrique élevée. Cela permet avantageusement de stabiliser la consommation électrique lors de la fusion électrique du verre et surtout d'éviter tout problème de court-circuit dans les produits réfractaires entraînant leur dégradation rapide. En effet, lors de la fusion électrique du verre une partie du courant électrique passe à travers les produits réfractaires. L'augmentation de la résistivité de ces produits réfractaires permet donc de réduire la quantité de courant électrique susceptible de les parcourir.

WO 2005 068393 décrit des produits fondus et coulés à forte teneur en zircone présentant une résistivité électrique élevée tout en minimisant les teneurs en BaO, SrO, MgO, CaO, P₂O₅, Na₂O et K₂O. Ces produits contiennent 0,1 à 1,2% en poids de B₂O₃ pour des teneurs en alumine comprises entre 0,9 et 2,5%.

JP 63 285173 décrit des produits fondus et coulés à forte teneur en zircone présentant une bonne résistivité électrique et une résistance à la fissuration pour des teneurs en silice inférieures à 6,5%.

WO 2007/099253 décrit un produit réfractaire fondu et coulé comportant, en pourcentages en poids sur la base des oxydes, plus de 85 % de ZrO₂+HfO₂, entre 1 et 10 % de SiO₂, entre 0,1 % et 2,4 % de Al₂O₃, moins de 1,5 % de B₂O₃ et un dopant choisi parmi un groupe dans lequel figurent Nb₂O₅ et Ta₂O₅.

FR 2 897 862 et FR 2 897 861 décrivent un produit réfractaire fondu et coulé comportant plus de 85% de ZrO₂+HfO₂, 2-10% de SiO₂, 0,1-2,4% de A₂O₃, moins de 1% de B₂O₃ et un dopant choisi parmi un groupe incluant Nb₂O₅ et Ta₂O₅.

L'actuel développement de verres de très haute qualité, en particulier des verres pour écrans plats de type LCD, augmente les exigences pour les produits réfractaires des fours de fusion du verre. En particulier, il existe un besoin pour des produits réfractaires présentant une résistivité électrique encore améliorée, sans avoir nécessairement recours à des dopants.

La présente invention vise à satisfaire ce besoin.

### Résumé de l'invention

Plus particulièrement, l'invention concerne un produit selon la revendication 1.

Comme on le verra plus loin, de manière surprenante, les inventeurs ont découvert que cette composition permet au produit réfractaire selon l'invention de présenter une résistivité électrique améliorée.

Un produit réfractaire selon l'invention peut alors encore comporter une ou plusieurs des caractéristiques optionnelles suivantes :
- Le rapport A/B des teneurs massiques Al₂O₃ / B₂O₃ est inférieur ou égal à 1,8, de préférence inférieur à 1,5, de préférence inférieur à 1,2, de préférence inférieur à 1,0, inférieur à 0,8, voire inférieur à 0,7.
- Le rapport A/B des teneurs massiques Al₂O₃ / B₂O₃ est supérieur à 0,1, voire supérieur à 0,2, voire supérieur à 0,3.
- La teneur massique de silice SiO₂ est inférieure ou égale à 11, 0%, voire inférieure ou égale à 10,0%, voire inférieure ou égale à 9,5%.
- La teneur massique de silice SiO₂ est supérieure ou égale à 7,5%, supérieure ou égale à 7,7 %, voire supérieure ou égale à 8,0%.
- La teneur massique d'alumine Al₂O₃ est inférieure ou égale à 0,7%, voire inférieure ou égale à 0,6%, voire inférieure ou égale à 0,5 %.
- La teneur massique Al₂O₃ est supérieure ou égale à 0,25 %, supérieure ou égale à 0,3%. Dans un mode de réalisation, cette teneur est supérieure ou égale à 0,4%.
- L'alumine Al₂O₃ n'est présente qu'à titre d'impuretés.
- La teneur massique (Na₂O+K₂O) est inférieure ou égale à 0,05%, voire inférieure ou égale à 0,03%.
- La teneur massique B₂O₃ est supérieure ou égale à 0,35%, voire supérieure ou égale à 0,4%, voire supérieure ou égale à 0,5%.
- La teneur massique B₂O₃ est inférieure ou égale à 1,2%, voire inférieure ou égale à 1,0%, voire inférieure ou égale à 0,80%, ou inférieure ou égale à 0,75 %, ou inférieure ou égale à 0,70 %, ou inférieure ou égale à 0,65 %.
- La teneur massique P₂O₅ est inférieure ou égale à 0,05%.
- Les oxydes de fer et/ou de titane et/ou de calcium et/ou de strontium et/ou de baryum et/ou de magnésium et/ou de zinc et/ou de phosphore ne sont présents qu'à titre d'impuretés.
- La teneur massique en oxydes de fer et/ou de titane, Fe₂O₃ + TiO₂, est inférieure à 0,4%, de préférence inférieure à 0,3%, de préférence inférieure à 0,2%.
- La teneur massique d'oxyde de calcium et/ou de strontium et/ou baryum et/ou de magnésium et/ou de zinc est inférieure à 0,2%, de préférence inférieure à 0,1%.
- La teneur massique totale en oxydes de calcium et/ou de strontium et/ou baryum et/ou de magnésium et/ou de zinc, CaO + SrO + BaO + MgO + ZnO, est inférieure à 0,3%, de préférence inférieure à 0,2%.
- La teneur massique totale des « autres espèces oxydes » est inférieure à 1,0%.
- Les « autres espèces oxydes » ne sont constituées que par des impuretés et la teneur massique totale des « autres espèces oxydes » est inférieure à 0,6%, inférieure à 0,5%, voire inférieure à 0,3%.
- Le produit comporte une teneur massique supérieure ou égale à 0,1 %, de préférence supérieure ou égale à 0,2%, de préférence supérieure ou égale à 0,25% et/ou inférieure ou égale à 1,3%, inférieure ou égale à 1,0%, de préférence inférieure ou égale à 0,9%, de préférence encore inférieure ou égale à 0,6% d'un dopant choisi parmi Nb₂O₅, Ta₂O₅ et leurs mélanges.
- Le rapport molaire ZrO₂ / (Nb₂O₅+Ta₂O₅) est compris entre 200 et 350.
- Le rapport molaire ZrO₂ / (Nb₂O₅ + Ta₂O₅) est supérieur à 250.
- La teneur massique en dopant Ta₂O₅ est supérieure ou égale à 0,1%, de préférence supérieure ou égale à 0,2%, et/ou inférieure ou égale à 1,2%, de préférence inférieure ou égale à 0,6%.
- La teneur massique en dopant Nb₂O₅ est supérieure ou égale à 0,1%, de préférence supérieure ou égale à 0,2%, et/ou inférieure ou égale à 1,0%, de préférence inférieure ou égale à 0,6%.
- Dans un mode de réalisation, la teneur massique totale en dopant Nb₂O₅ + Ta₂O₅ est inférieure ou égale à 0,6%.
- La teneur massique de silice SiO₂ est supérieure ou égale à 8,0% et inférieure ou égale à 10,0% et la teneur massique en dopant choisi parmi Nb₂O₅, Ta₂O₅ et leurs mélanges est inférieure ou égale à 0,6%.
- La teneur massique en oxyde d'yttrium Y₂O₃ est inférieure ou égale à 1%, de préférence inférieure à 0,5%, de préférence encore inférieure à 0,3%, voire inférieure à 0,2%.
- Dans un mode de réalisation, la teneur en BaO est inférieure à 0,10%, voire sensiblement nulle.
- Les produits divulgués dans les demandes de brevet n° WO 2007 099 253, PCT FR2008/051516 et PCT FR2008/051515 et dans les demandes de brevet de leurs familles, et notamment les produits des exemples de ces demandes de brevet, sont exclus de l'invention.
- Les produits suivants, sous la forme de blocs de 220 x 450 x 150 mm³ ou de barres cylindriques de 30 mm de diamètre et de 30 mm de hauteur, sont exclus de l'invention, les compositions étant fournies en pourcentages massiques sur la base des oxydes :

| ZrO₂ | SiO₂ | B₂O₃ | Al₂O₃ | Nb₃O₅ | Ta₃O₅ | Y₂O₃ | BaO |
|---|---|---|---|---|---|---|---|
| 90,3 | 7,1 | 0,6 | 0,79 | 0,33 | 0,76 | 0,2 | |
| 89,2 | 8,3 | 0,49 | 0,8 | 0,31 | 0,7 | 0,2 | |
| 87,3 | 11,2 | 0,6 | 0,54 | 0,16 | | 0,17 | 0,02 |
| 90,2 | 7,4 | 0,9 | 0,3 | | 1,2 | | |

- Dans un mode de réalisation, tous les produits présentant une composition dans le tableau ci-dessus sont exclus, quelle que soit leur forme.
- Dans un mode de réalisation, tous les produits présentant une composition proche d'au moins une des compositions du tableau ci-dessus sont exclus. Une première composition est dite « proche » d'une deuxième composition lorsque, quel que soit le constituant de la première composition considérée, l'écart absolu entre les teneurs dudit constituant dans la première composition et dans la deuxième composition est inférieur à 0,10%, en pourcentage massique.

Dans un mode de réalisation préféré, SiO₂ ≤ 11,0 %, de préférence SiO₂ ≤ 10,0 %, et Ta₂O₅ + Nb₂O₅ ≤ 1,0 %, de préférence Nb₂O₅ ≤ 0,6 %.

De préférence encore,
- SiO₂ ≤ 10,0 %, et Ta₂O₅ + Nb₂O₅ ≤ 1,0 % avec Nb₂O₅ ≤ 0,6 % et
- Na₂O + K₂O ≤ 0,05 %, voire Na₂O + K₂O ≤ 0,03 %, et
- CaO + SrO + MgO + ZnO + BaO < 0,3 %, voire CaO + SrO + MgO + ZnO + BaO < 0,2 %, et
- BaO < 0,1%, et
- Fe₂O₃ + TiO₂ < 0,3 % et
- Y₂O₃ < 0,3 %.

L'invention concerne également un procédé de fabrication d'un produit réfractaire selon l'invention, comprenant les étapes successives suivantes :
a) mélange de matières premières de manière à former une charge de départ,
b) fusion de ladite charge de départ jusqu'à obtention d'une matière en fusion,
c) coulage et solidification de ladite matière en fusion, par refroidissement, de manière à obtenir un produit réfractaire,
ce procédé étant remarquable en ce que lesdites matières premières sont choisies de manière que ledit produit réfractaire soit conforme à l'invention.

De préférence, on ajoute systématiquement et méthodiquement les oxydes pour lesquels une teneur minimale est nécessaire, notamment ZrO₂, SiO₂, B₂O₃, ou des précurseurs de ces oxydes. De préférence, on tient compte des teneurs de ces oxydes dans les sources des autres oxydes où ils sont classiquement considérés comme des impuretés.

De préférence, le refroidissement est contrôlé, de préférence de manière à être effectué à une vitesse inférieure à 20°C par heure, de préférence à la vitesse d'environ 10°C par heure.

L'invention concerne aussi un four de fusion de verre comportant un produit réfractaire selon l'invention, ou un produit réfractaire fabriqué ou susceptible d'être fabriqué suivant un procédé selon l'invention, en particulier dans une région destinée à être en contact avec le verre en fusion. Dans un four selon l'invention, le produit réfractaire peut avantageusement faire partie d'une cuve de préparation de verre par fusion, notamment par fusion électrique, où il est susceptible d'entrer en contact avec du verre en fusion à une température supérieure à 1200°C.

### Définitions

Les teneurs massiques en oxydes se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments susmentionnés.

Une « matière en fusion » est une masse liquide qui, pour conserver sa forme, doit être contenue dans un récipient. Elle peut contenir quelques particules solides, mais en quantité insuffisante pour qu'elles puissent structurer ladite masse.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de fer, titane, vanadium et chrome sont des impuretés.

Sauf mention contraire, toutes les teneurs en oxydes dans les produits décrits et revendiqués sont des pourcentages massiques sur la base des oxydes.

### Description détaillée de l'invention

Dans un produit fondu et coulé selon l'invention, la forte teneur en zircone ZrO₂ permet de répondre aux exigences de haute résistance à la corrosion sans coloration du verre produit ni génération de défauts nuisibles à la qualité de ce verre.

Dans un produit obtenu par fusion, HfO₂ n'est pas chimiquement dissociable de ZrO₂. Dans la composition chimique d'un tel produit, ZrO₂+HfO₂ désigne donc la teneur totale de ces deux oxydes. Cependant, selon la présente invention, HfO₂ n'est pas ajouté volontairement dans la charge de départ. HfO₂ ne désigne donc que les traces d'oxyde d'hafnium, cet oxyde étant toujours naturellement présent dans les sources de zircone à des teneurs généralement inférieures à 2%. Par souci de clarté, on peut donc désigner indifféremment la teneur en zircone et en trace d'oxyde d'hafnium par ZrO₂+HfO₂ ou par ZrO₂, on encore par « teneur en zircone ».

La teneur en oxyde d'hafnium, HfO₂ dans un produit selon l'invention est inférieure ou égale à 5%, généralement inférieure ou égale à 2%.

La présence de silice SiO₂ permet notamment la formation d'une phase vitreuse intergranulaire apte à accommoder de manière efficace les variations de volume de la zircone lors de sa transformation allotropique réversible, c'est-à-dire lors du passage de la phase monoclinique à la phase tétragonale. La présence de silice SiO₂ à une teneur massique supérieure à 7,0% permet d'atteindre des résistivités électriques élevées.

En revanche, l'ajout de silice ne doit pas dépasser 12,5% car cet ajout se fait au détriment de la teneur en zircone et peut donc nuire à la résistance à la corrosion. De plus, une trop forte teneur en silice pourrait générer des défauts dans le verre par lâcher de pierres (morceaux de produit réfractaire résultant d'une perte de cohésion du produit), ce qui est considéré comme un mauvais comportement à l'application.

La présence d'alumine favorise la formation d'une phase vitreuse stable et améliore la coulabilité des produits dans le moule. Une teneur excessive entraîne une instabilité de la phase vitreuse (formation de cristaux), ce qui a un impact négatif sur la faisabilité, en particulier en présence d'oxyde de bore. La teneur massique en alumine doit donc rester inférieure à 0,8%.

Dans un produit selon l'invention, on considère que les oxydes Na₂O et K₂O ont des effets similaires.

Les oxydes Na₂O et K₂O ont un effet défavorable sur la résistivité électrique. La teneur massique de Na₂O+K₂O doit donc être inférieure à 0,1%.

La présence d'une teneur massique de B₂O₃ dans une proportion telle que le rapport A/B des teneurs massiques Al₂O₃ / B₂O₃ soit inférieur ou égal à 2 permet d'augmenter les résistivités électriques.

Selon l'invention, la teneur massique de Fe₂O₃ + TiO₂ est inférieure à 0,55% et celle de P₂O₅ est inférieure à 0,15%, de préférence inférieure à 0,10%, de préférence encore inférieure à 0,05%. En effet, ces oxydes sont connus pour être néfastes et leur teneur doit être de préférence limitée à des traces introduites à titre d'impuretés avec les matières premières.

Les « autres espèces oxydes » sont les espèces qui ne sont pas listées ci-dessus, à savoir les espèces autres que ZrO₂, Hf₂O, SiO₂, Al₂O₃, Na₂O, K₂O, B₂O₃, CaO, SrO, BaO, MgO, ZnO, P₂O₅, Fe₂O₃ et TiO₂. Nib₂O₅ et Ta₂O₅ sont notamment à comptabiliser parmi les « autres espèces oxydes ».

Dans un mode de réalisation, les « autres espèces oxydes » sont limitées à des espèces dont la présence n'est pas particulièrement souhaitée et qui sont généralement présentes à titre d'impuretés dans les matières premières.

Dans un autre mode de réalisation, les « autres espèces oxydes » peuvent également comprendre des espèces dont la présence est avantageuse. Ainsi, dans un mode de réalisation, le produit comporte avantageusement au moins 0,1%, de préférence au moins 0,2% d'un dopant permettant d'améliorer encore la résistivité électrique, par exemple Nb₂O₅, Ta₂O₅ ou leurs mélanges. La teneur massique de dopant est cependant de préférence inférieure ou égale à 1,0%, de préférence inférieure ou égale à 0,9%, de préférence encore inférieure ou égale à 0,6%.

Dans un mode de réalisation, les « autres espèces oxydes » ne comportent ni Nib₂O₅, ni Ta₂O₅ (le produit ne contient pas ces oxydes).

Classiquement, dans un produit fondu et coulé, les oxydes représentent plus de 98,5%, plus de 99%, voire sensiblement 100% de la masse du produit. Il en est de même dans un produit selon l'invention.

Un produit selon l'invention peut être classiquement fabriqué suivant les étapes a) à c) décrites ci-dessous :
a) mélange de matières premières de manière à former une charge de départ,
b) fusion de ladite charge de départ jusqu'à obtention d'une matière en fusion,
c) solidification de ladite matière en fusion, par refroidissement, de manière à obtenir un produit réfractaire selon l'invention.

A l'étape a), les matières premières sont choisies de manière à garantir les teneurs en oxydes dans le produit fini.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes ou des nitrates.

La fusion peut en particulier s'opérer à une température supérieure à 2300°C, de préférence comprise entre 2400°C et 2500°C.

A l'étape c), le refroidissement est de préférence effectué à une vitesse inférieure à 20°C par heure, de préférence à la vitesse d'environ 10°C par heure.

Un produit de l'invention ainsi fabriqué est constitué de grains de zircone entourés par une phase vitreuse. La zircone peut être monoclinique pour plus de 80%, plus de 90%, plus de 99% ou sensiblement 100%, en pourcentage massique. La phase vitreuse peut comporter plus de 50%, voire plus de 70%, de silice, entre 5% et 20% de B₂O₃ et entre 1% et 20% d'alumine, en pourcentages massiques sur la base de la phase vitreuse. La silice, B₂O₃ et l'alumine peuvent représenter plus de 95%, plus de 97%, voire sensiblement 100% de là masse de la phase vitreuse.

Tout procédé conventionnel de fabrication de produits fondus à base de zircone destinés à des applications dans des fours de fusion de verre peut être mis en oeuvre, pourvu que la composition de la charge de départ permette d'obtenir des produits présentant une composition conforme à celle d'un produit selon l'invention.

### Exemples

Les exemples non limitatifs suivants sont donnés dans le but d'illustrer l'invention.

Dans ces exemples, on a employé les matières premières suivantes :
de la zircone contenant principalement, en moyenne massique, 98,5% de ZrO₂+ HfO₂, 0,2% de SiO₂ et 0,02% de Na₂O,
- du sable de zircon à 33% de silice,
- de l'oxyde de bore de pureté supérieure à 99%.

Les matières premières ont été fondues selon le procédé classique de fusion en four à arc puis la matière en fusion a été coulée pour obtenir des blocs de format 220 mm x 450 mm x 150 mm.

L'exemple 1 correspond au produit ER1195, commercialisé par Saint-Gobain SEFPRO, et constitue la référence.

Pour tous les produits obtenus, l'analyse cristallographique révèle des cristaux de zircone monoclinique entourés d'une phase vitreuse comportant typiquement plus de 70% de silice. La totalité de la silice ainsi que des autres espèces oxydes à l'exception de la zircone se retrouvent dans la phase vitreuse.

L'analyse chimique des produits obtenus est donnée dans le tableau 1 ; il s'agit d'une analyse chimique globale moyenne, donnée en pourcentages massiques.

Dans le tableau 1 suivant, * indique que l'exemple est en dehors de l'invention, une case vide correspond à une teneur inférieure ou égale à 0,05% massique. Le complément à 100% est constitué par les « autres espèces oxydes ».

On a extrait sur les différents exemples de blocs réalisés des barreaux cylindriques de produit de 30 mm de diamètre et de 30 mm de hauteur. Ces barreaux ont été soumis à une différence de potentiel de 1 volt à une fréquence de 100 Hertz à respectivement 1500°C ou 1600°C pour réaliser des mesures de résistivité électrique, respectivement « R1500 » et « R1600 ».

**Tableau 1**

| | ZrO₂ | SiO₂ | B₂O₃ | Al₂O₃ | A/B (Al₂O₃/ B₂O₃) | Na₂O | R1500 (Ω.cm) | R1600 (Ω.cm) |
|---|---|---|---|---|---|---|---|---|
| 1* | 94,5 | 4,0 | | 1,20 | | 0,3 | 70 | |
| 2* | 91,3 | 7,0 | 0,60 | 1,10 | | | 95 | |
| 3* | 94,6 | 4,3 | 0,30 | 0,50 | | 0,10 | 139 | |
| 4* | 89,8 | 8,3 | 0,60 | 1,20 | | | 165 | |
| 5* | 90,2 | 7,9 | 0,50 | 1,10 | 2,2 | | 175 | 100 |
| 6 | 90,8 | 8,1 | 0,40 | 0,40 | 1,0 | | 350 | 200 |
| 7* | 88,9 | 9,4 | 0,30 | 1,10 | 3,5 | | 265 | 180 |
| 8 | 89,3 | 9,2 | 0,60 | 0,60 | 1,0 | | 290 | 195 |
| 9 | 89,6 | 9,2 | 0,60 | 0,30 | 0,5 | | 390 | 260 |

Une comparaison des exemples 6 à 9 démontre, à teneur en silice sensiblement constante et en l'absence de Na₂O, l'effet positif d'un rapport A/B inférieur à 2,0, voire inférieur à 1,5, et même inférieur à 0,8, l'exemple 9 étant préféré entre tous.

Les résultats montrent également que les produits de l'invention testés présentent une résistivité électrique améliorée malgré l'absence de dopant.

Pour confirmer ces premiers résultats, les inventeurs ont procédé à d'autres mesures de résistivité sur des blocs fondus de 1 kg de phase vitreuse. Ces blocs ont été soumis à une différence de potentiel de 1 volt à une fréquence de 2500 Hertz à respectivement 1500°C ou 1600°C pour réaliser des mesures de résistivité électrique, respectivement « R1500 » et « R1600 ». Les résultats sont résumés dans le tableau 2.

Ces essais confirment l'importance du rapport A/B.

**Tableau 2**

| | Dans la phase vitreuse analysée | | | | | |
|---|---|---|---|---|---|---|
| | SiO₂ | B₂O₃ | Al₂O₃ | A/B | R1500 (Ω.cm) | R1600 (Ω.cm) |
| 10 | 76,2 | 9,1 | 14,7 | 1,6 | 2344 | 1259 |
| 11 | 78,3 | 9,6 | 12,1 | 1,3 | 3020 | 1778 |
| 12 | 85,8 | 8,9 | 5,2 | 0,6 | 4074 | 3162 |
| 13 | 77,6 | 15,2 | 7,2 | 0,5 | 3090 | 2188 |
| 14 | 73,4 | 18,6 | 8 | 0,4 | 2285 | 1504 |
| 15 | 77,9 | 18,5 | 3,6 | 0,2 | 3548 | 2630 |

Le tableau 2 montre encore que des performances optimales sur R1500 comme sur R1600 sont obtenues avec l'exemple 12, présentant un rapport A/B de 0,6.

Bien entendu, la présente invention n'est pas limitée aux modes de réalisation décrits et représentés fournis à titre d'exemples illustratifs et non limitatifs.

## Revendications

1. Produit réfractaire fondu et coulé
comportant, en pourcentages massiques sur la base des oxydes et pour un total de 100% des oxydes:
- ZrO₂ + Hf₂O complément à 100% ;
- SiO₂ : 7,0% à 11,0% ;
- Al₂O₃ : 0,2% à 0,7% ;
- Na₂O + K₂O : < 0,10% ;
- B₂O₃ : 0,3% à 1,5% :
- CaO + SrO + MgO + ZnO + BaO : < 0,4% ;
- P₂O₅ : < 0,15% ;
- Fe₂O₃ + TiO₂ : < 0,55% :
- autres espèces oxydes : < 1,5% ;
présentant une teneur massique en un dopant choisi parmi Nb₂O₅, Ta₂O₅ et leurs mélanges inférieure ou égale à 1,0%,
le rapport « A/B » des teneurs massiques Al₂O₃ / B₂O₃ étant inférieur ou égal à 2,0,
à l'exclusion des produits fondus et coulés, sous la forme d'un bloc de 220 x 450 x 150 mm³ ou d'une barre cylindrique de 30 mm de diamètre et de 30 mm de hauteur, présentant les compositions chimiques suivantes, en pourcentages massiques sur la base des oxydes :
| ZrO₂ | SiO₂ | B₂O₃ | Al₂O₃ | Nb₂O₅ | Ta₂O₅ | Y₂O₃ | BaO |
|---|---|---|---|---|---|---|---|
| 91,1 | 7,5 | 0,60 | 0,44 | | | 0,17 | 0,13 |
| 90,0 | 8,1 | 0,41 | 0,54 | 0,74 | | 0,20 | |
| 89,8 | 8,4 | 0,48 | 0,44 | 0,66 | | 0,20 | |
| 89,3 | 8,9 | 0,49 | 0,47 | 0,71 | | 0,20 | |
| 88.6 | 9,3 | 0,54 | 0,50 | 0,76 | | 0,20 | 0,13 |
| 87,6 | 10,2 | 0,53 | 0,53 | 0,80 | | 0,19 | 0,10 |
| 87,4 | 10,8 | 0,89 | 0,54 | 0,20 | | 0,18 | 0,03 |

2. Produit selon la revendication précédente, dans lequel le rapport A/B est inférieur à 1,5.

3. Produit selon la revendication précédente, dans lequel le rapport A/B est inférieur à 0,8.

4. Produit selon l'une quelconque des revendications précédentes, comportant une teneur massique en ledit dopant supérieure ou égale à 0,1%.

5. Produit selon l'une quelconque des revendications précédentes, comportant une teneur massique en ledit dopant inférieure ou égale à 0,6%.

6. Produit selon l'une quelconque des revendications précédentes, comportant une teneur massique en Nb₂O₅ inférieure ou égale à 0,6%.

7. Produit selon l'une quelconque des revendications 1 à 3 ne comportant ni Nb₂O₅, ni Ta₂O₅.

8. Produit selon l'une quelconque des revendications précédentes, dans lequel la teneur massique de silice SiO₂ est inférieure ou égale à 10,0%.

9. Produit selon l'une quelconque des revendications précédentes, dans lequel la teneur massique de silice SiO₂ est supérieure ou égale à 8,0%.

10. Produit selon l'une quelconque des revendications précédentes, dans lequel la teneur massique en B₂O₃ est supérieure ou égale à 0,5%.

11. Produit selon l'une quelconque des revendications précédentes, dans lequel la teneur massique en B₂O₃ est inférieure ou égale à 1,0%.

12. Produit selon l'une quelconque des revendications précédentes, dans lequel la teneur massique en B₂O₃ est inférieure ou égale à 0,8%.

13. Produit selon l'une quelconque des revendications précédentes, dans lequel la teneur massique Na₂O+K₂O est inférieure ou égale à 0,05%, la teneur massique en oxydes de fer et/ou de titane, Fe₂O₃+TiO₂, est inférieure à 0,4%, la teneur massique en P₂O₅ est inférieure ou égale à 0,05%, la teneur massique totale en oxydes de calcium et/ou de strontium et/ou de baryum et/ou de magnésium et/ou de zinc, CaO + SrO + BaO + MgO + ZnO, est inférieure à 0,3%, et la teneur massique totale des « autres espèces oxydes » est inférieure à 0,6%.

## Patentansprüche

1. Geschmolzenes und gegossenes Feuerfestprodukt bestehend in Massenprozenten auf der Basis von Oxyden und für gesamt 100% von Oxyden aus:
- ZrO₂ + Hf₂O: zu 100% vervollständigend
- SiO₂: 7,0% bis 11,0%
- Al₂O₃ : 0,2% bis 0,7%
- Na₂O + K₂O : < 0,10%
- B₂O₃: 0,3% bis 1,5%
- CaO+SrO+MgO+ZnO+BaO: < 0,4%
- P₂O₅: < 0,15%
- Fe₂O₃ + TiO₂: < 0,55%
- andere Oxidarten: < 1,5%;
welches einen Massengehalt eines Dotierungsmittels, welches aus Nb₂O₅, Ta₂O₅ sowie ihren Mischungen ausgewählt ist, von kleiner oder gleich 1,0% aufweist, wobei das Verhältnis "A/B" der Massengehalte Al₂O₃ / B₂O₃ kleiner oder gleich 2,0 ist, mit Ausschluss von geschmolzenen und gegossenen Produkten in Form eines Blockes von 220 x 450 x 150 mm³ oder einem zylindrischen Barren von 30 mm im Durchmesser und 30 mm Höhe, die folgende chemischen Zusammensetzungen in Massenprozenten auf der Basis von Oxyden aufweisen:
| ZrO₂ | SiO₂ | B₂O₃ | Al₂O₃ | Nb₂O₅ | Ta₂O₅ | Y₂O₃ | BaO |
|---|---|---|---|---|---|---|---|
| 91,1 | 7,5 | 0,60 | 0,44 | | | 0,17 | 0,13 |
| 90,0 | 8,1 | 0,41 | 0,54 | 0,74 | | 0,20 | |
| 89,8 | 8,4 | 0,48 | 0,44 | 0,66 | | 0,20 | |
| 89,3 | 8,9 | 0,49 | 0,47 | 0,71 | | 0,20 | |
| 88,6 | 9,3 | 0,54 | 0,50 | 0,76 | | 0,20 | 0,13 |
| 87,6 | 10,2 | 0,53 | 0,53 | 0,80 | | 0,19 | 0,10 |
| 87,4 | 10,8 | 0,89 | 0,54 | 0,20 | | 0,18 | 0,03 |

2. Produkt nach dem vorhergehenden Anspruch, bei dem das Verhältnis A/B kleiner als 1,5 ist.

3. Produkt nach dem vorhergehenden Anspruch, in welchem das Verhältnis A/B kleiner als 0,8 ist.

4. Produkt nach einem der vorhergehenden Ansprüche, welches einen Massengehalt an besagtem Dotierungsmittel von größer oder gleich 0,1% enthält.

5. Produkt nach einem der vorhergehenden Ansprüche, welches einen Massengehalt an besagtem Dotierungsmittel von kleiner oder gleich 0,6% enthält.

6. Produkt nach einem der vorhergehenden Ansprüche, welches einen Massengehalt an Nb₂O₅ von weniger oder gleich 0,6% enthält.

7. Produkt nach einem der Ansprüche 1 bis 3, welches weder Nb₂O₅ noch Ta₂O₅ enthält.

8. Produkt nach einem der vorhergehenden Ansprüche, in welchem der Massengehalt an Siliciumoxyd SiO₂ kleiner oder gleich 10,0% ist.

9. Produkt nach einem der vorhergehenden Ansprüche, in welchem der Massengehalt an Siliciumoxyd SiO₂ größer oder gleich 8,0% ist.

10. Produkt nach einem der vorhergehenden Ansprüche, in welchem der Massengehalt an B₂O₃ größer oder gleich 0,5% ist.

11. Produkt nach einem der vorhergehenden Ansprüche, in welchem der Massengehalt an B₂O₃ kleiner oder gleich 1,0% ist.

12. Produkt nach einem der vorhergehenden Ansprüche, in welchem der Massengehalt an B₂O₃ kleiner oder gleich 0,8% ist.

13. Produkt nach einem der vorhergehenden Ansprüche, in welchem der Massengehalt Na₂O + K₂O kleiner oder gleich 0,05%, der Massengehalt an Oxyden von Eisen und/oder Titan, Fe₂O₃ + TiO₂ kleiner als 0,4%, der Massengehalt an P₂O₅ kleiner oder gleich 0,05%, der totale Massengehalt an Oxyden von Kalzium und/oder Strontium und/oder Barium und/oder Magnesium und/oder Zink, CaO + SrO + BaO + MgO + ZnO, kleiner als 0,3% und der totale Massengehalt an "anderen Oxydarten" kleiner als 0,6% ist.

## Claims

1. A fused and cast refractory product including, in mass percentages on the basis of the oxides and for a total of 100% of the oxides:
- ZrO₂ + Hf₂O : balance to 100% ;
- SiO₂ : 7.0% to 11.0% ;
- Al₂O₃ : 0.2% to 0.7% ;
- Na₂O + K₂O : < 0.10% ;
- B₂O₃ : 0.3% to 1,5% ;
- CaO + SrO + MgO + ZnO + BaO : < 0.4% ;
- P₂O₅ : < 0.15% ;
- Fe₂O₃ + TiO₂ : < 0.55% ;
- Other oxide species: < 1.5% ;
the mass content of a dopant selected from Nb₂O₅, Ta₂O₅ and mixtures thereof being of less or equal to 1.0%,
the « A/B » ratio of the Al₂O₃ / B₂O₃ mass contents being less than or equal to 2.0,
excluding the fused and cast products as a block of 220 x 450 x 150 mm³ or a cylindrical bar of a diameter of 30 mm and a height of 30 mm, having the following chemical composition, in mass percentages on the basis of the oxides:
| ZrO₂ | SiO₂ | B₂O₃ | Al₂O₃ | Nb₂O₅ | Ta₂O₅ | Y₂O₃ | BaO |
|---|---|---|---|---|---|---|---|
| 91.1 | 7.5 | 0.60 | 0.44 | | | 0.17 | 0.13 |
| 90.0 | 8.1 | 0.41 | 0.54 | 0.74 | | 0.20 | |
| 89.8 | 8.4 | 0.48 | 0.44 | 0.66 | | 0.20 | |
| 89.3 | 8.9 | 0.49 | 0.47 | 0.71 | | 0.20 | |
| 88.6 | 9.3 | 0.54 | 0.50 | 0.76 | | 0.20 | 0.13 |
| 87.6 | 10.2 | 0.53 | 0.53 | 0.80 | | 0.19 | 0.10 |
| 87.4 | 10.8 | 0.89 | 0.54 | 0.20 | | 0.18 | 0.03 |

2. The product according to the preceding claim, wherein the ratio A/B is less than 1.5.

3. The product according to the preceding claim, wherein the ratio A/B is less than 0.8.

4. The product according to any of the preceding claims , including a mass content of said dopant greater than or equal to 0.1 %.

5. The product according to any of the preceding claims, including a mass content of said dopant of less than or equal to 0.6%.

6. The product according to any of the preceding claims, including a mass content of Nb₂O₅ less than or equal to 0.6%.

7. The product according to any of claims 1 to 3 including neither Nb₂O₅ nor Ta₂O₅.

8. The product according to any of the preceding claims, wherein the mass silica SiO₂ content is less than or equal to 10.0%.

9. The product according to any of the preceding claims, wherein the mass silica SiO₂ content is greater than or equal to 8.0%.

10. The product according to any of the preceding claims, wherein the mass B₂O₃ content is greater than or equal to 0.5%.

11. The product according to any of the preceding claims, wherein the mass B₂O₃ content is less than or equal to 1.0%.

12. The product according to any of the preceding claims, wherein the mass B₂O₃ content is less than or equal to 0.8 %.

13. The product according to any of the preceding claims, wherein the mass Na₂O+K₂O content is less than or equal to 0.05%, the mass iron and/or titanium oxide, Fe₂O₃+TiO₂, content is less than 0.4%, the mass P₂O₅ content is less than or equal to 0.05%, the total mass calcium and/or strontium and/or barium and/or magnesium and/or zinc oxide, CaO + SrO + BaO + MgO + ZnO, content is less than 0.3%, and the total mass content of « the other oxide species » is less than 0.6%.
